# EUROPÄISCHE PATENTSCHRIFT

(11) **EP 0 537 170 B1**
(45) Veröffentlichungstag und Bekanntmachung des Hinweises auf die Patenterteilung: **02.08.1995**
(21) Anmeldenummer: 91909405.2
(22) Anmeldetag: 25.05.1991
(51) Int. Cl.: F16K 31/06, H01F 7/18

(54) **REGELELEKTRONIK FÜR SOLOBETRIEBENE MAGNETVENTILE UND FÜR VENTILKASKADEN**
ELECTRONIC CONTROL SYSTEM FOR MAGNETIC VALVES OPERATED INDIVIDUALLY OR IN CASCADE
ELECTRONIQUE DE REGULATION POUR VANNES MAGNETIQUES A FONCTIONNEMENT ISOLE ET POUR CASCADE DE VANNES

(30) Priorität: 30.06.1990 DE 4020934
(43) Veröffentlichungstag der Anmeldung: 21.04.1993
(73) Patentinhaber: ROBERT BOSCH GMBH, 70442 Stuttgart (DE)
(72) Erfinder: ÖTTINGER, Rolf, D-7143 Vaihingen Enz 7 (DE); LATT, Martin, D-7015 Korntal-Münchingen (DE)
(86) Internationale Anmeldenummer: DE9100437
(87) Internationale Veröffentlichungsnummer: WO9200480

(56) Entgegenhaltungen:
- EP-A- 0 098 719
- DE-A- 2 256 316
- DE-A- 2 840 831
- DE-A- 3 825 935

## Beschreibung

### Stand der Technik

Die Erfindung betrifft eine Regelelektronik für solobetriebene Magnetventile und für Ventilkaskaden gemäß der Gattung des Hauptanspruchs. Eine Regelelektronik dieser Art ist aus dem allgemeinen Stand der Technik bekannt.

Zur Betätigung von Ventilen können unterschiedliche Antriebe Verwendung finden. Zur Steuerung von kleinen Leistungen können Ventile mit einem Magnetantrieb versehen sein, während höherer Leistungen einen hydraulischen Antrieb erfordern können.

Aus der DE-A-38 25 935 ist ein elektromagnetisches Proportionalventil bekannt, das ein Ventilteil zur Steuerung des Durchflusses einer Flüssigkeit besitzt. Das Ventilteil wird von Elektromagneten betätigt, die von einer Verstärkereinheit angesteuert werden.

Bei kleineren Leistungsanforderungen kann somit ein solobetriebenes Magnetventil mittels eines Reglers elektrisch eingestellt werden. Bei höheren Leistungsanforderungen wird ein Magnetventil einem hydraulisch betätigten Hauptventil vorgeschaltet, wobei das Druckmittel zur Betätigung des Hauptventils über das Magnetventil gesteuert wird. Das Magnetventil bildet zusammen mit dem Hauptventil eine Ventilkaskade, bei der das Magnetventil als Pilotventil betrieben wird. Die vom Regler abgegebene Regelspannung wirkt dabei nicht direkt auf das eigentlich einzustellende Hauptventil ein, sondern liegt am Stellmagneten des Magnetventils an. Aus einem Soll-Istwertvergleich der Ventilstellung des Hauptventils läßt sich eine Regelspannung ableiten, die das vorgeschaltete Magnetventil derart steuert, daß die Ventilstellung des Hauptventils auf den Sollwert eingestellt wird.

Die für die Erzeugung der Regelspannung verwendete Regelelektronik wird üblicherweise in einer separat von den Ventilen angeordneten Steuerung untergebracht. Je nach Ventilart - solobetriebenes Magnetventil oder Ventilkaskade aus Pilotventil und Hauptventil - werden unterschiedliche Schaltungsanordnungen für die beiden unterschiedlichen Regelungen verwendet. Dies hat den Nachteil, daß die Regelungselektronik in ihrem Aufbau an die jeweils vorgesehene Betriebsart - Solobetrieb oder Pilotbetrieb - angepaßt sein muß.

### Vorteile der Erfindung

Eine Regelelektronik mit den Merkmalen des Hauptanspruchs hat demgegenüber den Vorteil, daß eine Umschaltlogik in Abhängigkeit von den verwendeten Ventilen eine Einstellung der Regelung aus Solobetrieb oder Pilotbetrieb selbsttätig vornimmt. Zu diesem Zweck erkennt die Umschaltlogik ob ein Istwert eines Hauptventils an dem dafür vorgesehenen Steuereingang anliegt. Handelt es sich bei dem zu steuernden Ventil um ein solobetriebenes Magnetventil, so liegt zwangsläufig am Signaleingang für das Hauptventil kein entsprechender Istwert an, sondern es wird ein konstanter Pegel an diesen Steuereingang angelegt. Dieser konstante Pegel wird von der Umschaltlogik erkannt und daraufhin die Regelelektronik auf Solobetrieb geschaltet. Wird die elektrische Leitung zu der Gleichspannungsquelle die den genannten konstanten Pegel liefert unterbrochen, so wird diese Störung von der Umschaltlogik erkannt, die daraufhin eine Fehlerkennung, ein Alarmsignal oder dergleichen auslösen kann. Die Regelelektronik kann direkt an Magnetventilen montiert werden, und zwar unabhängig davon ob diese Magnetventile später im Solobetrieb oder im Pilotbetrieb in Verbindung mit Hauptventilen Verwendung finden. Durch diese universelle Verwendbarkeit der Regelelektronik wird eine Rationalisierung der Fertigung und Lagerhaltung ermöglicht.

Im Pilotbetrieb mit druckmittelbetätigten Hauptventil ist in der Regelelektronik ein erster Differenzverstärker und ein ihm nachgeschalteter zweiter Differenzverstärker wirksam, wobei der erste Differenzverstärker für den Soll- Istwertvergleich der Werte des Hauptventils und der zweite Differenzverstärker den Ausgang des ersten Differenzverstärkers mit dem Istwert des Magnetventils vergleicht und ausgangsseitig die Regelspannung für das Magnetventil liefert. Im Solobetrieb ist dagegen nur der zweite Differenzverstärker wirksam, der dann einen Soll-Istwertvergleich der Werte des Magnetventils vornimmt. Es sind in der Regelelektronik also nicht völlig getrennte Schaltungselemente für den Solobetrieb und den Pilotbetrieb vorgesehen, vielmehr wird beispielsweise der zweite Differenzverstärker sowohl im Solobetrieb als auch im Pilotbetrieb zur Erzeugung der Regelspannung verwendet. Dies hat nicht nur den Vorteil, daß die Regelelektronik einen geringen Schaltungsaufwand aufweist, sondern daß auch die Leistungsendstufe, die mit der Regelspannung angesteuert wird und ausgangsseitig mit dem Magneten des Magnetventils verbunden ist, in jeder Betriebsart mit dem Ausgang des zweiten Differenzverstärkers verbunden ist. Es ist somit für beide Betriebsarten nur ein einziger Regelspannanungausgang erforderlich.

Die Regelelektronik kann weiterhin einen Istwertausgang besitzen, an dem wahlweise der Istwert der Ventilstellung des Hauptventils oder des solobetriebenen Magnetventils abgenommen werden kann. Zu diesem Zweck werden die entsprechenden Istwerteingänge über alternativ zu schließende Schalter auf den Istwertausgans durchgeschaltet. Die Umschaltung wird von der gleichen Umschaltlogik durchgeführt, die auch die Umschaltung der Betriebsart "Solobetrieb/Pilotbetrieb" vornimmt. Der gesamte Schaltungsaufwand wird dadurch verhältnismäßig gering gehalten.

Um eine sichere Erkennung der jeweils gewünschten Betriebsart für die Umschaltlogik zu ermöglichen, kann im Solobetrieb mittels einer Kontaktbrücke eine definierte Gleichspannung an den mit der Umschaltlogik verbundenen Steuereingang angelegt werden. Der Gleichspannungswert dieser Gleichspannung liegt außerhalb des möglichen Istwertbereichs des Hauptventils, so daß für die Umschaltlogik eine eindeutige Erkennung der jeweils gewünschten Betriebsart möglich ist. Ist die Kontaktbrücke oder die Verbindung zu einem angeschlossenen Istwertgeber unterbrochen, so kann dieser Fehlerzustand von der Umschaltlogik erkannt und zur Anzeige gebracht werden.

### Zeichnung

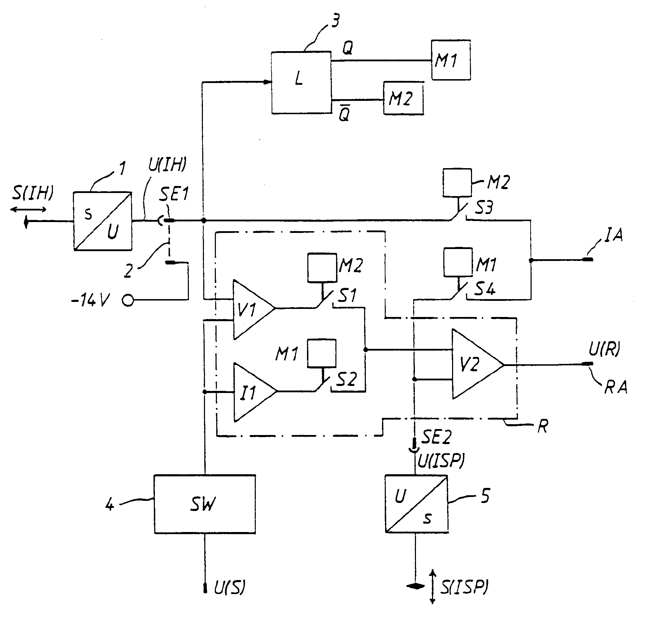

Die Erfindung wird nachfolgend anhand eines in der Zeichnung dargestellten Ausführungsbeispiels näher erläutert.

Die Zeichnung zeigt eine Regelelektronik für solobetriebene Magnetventile und für
Ventilkaskaden mit jeweils einem als Pilotventil betriebenen Magnetventil. Der Istwert S (IH) der Ventilstellung eines hier nicht dargestellten Hauptventils wird von einem Istwertgeeber 1 aufgenommen, der die jeweils aktuelle Ventilstellung als Weg s feststellt und in einen elektrischen Istwert U (IH) umwandelt und einem Steuereingang SE1 der Regelelektronik zuführt. Wird die Steuerelektronik zur Steuerung eines solobetriebenen Magnetventils verwendet, so ist der Steuereingang SE1 nicht mit dem Istwertgeber 1 verbunden, sondern über eine Kontaktbrücke 2 auf einen konstanten Pegel von -14 V gelegt.

Der Steuereingang SE1 ist in der Regelelektronik mit dem Eingang einer Umschaltlogik 3 und mit dem ersten Eingang eines ersten Differenzverstärkers V1 verbunden. Am zweiten Eingang des Differenzverstärkers V1 liegt der Sollwert U (S) einer vorgegebenen Ventilstellung an. Mittels eines Signalwandlers 4 kann der Sollwert U (S) modifiziert sein. Der Signalwandler 4 kann beispielsweise den Offset und den Pegelbereich des Sollwerts an den Istwert U (IH) anpassen.

Der Sollwert U (S) wird über den Signalwandler 4 nicht nur dem zweiten Eingang des ersten Differnzverstärkers V1 zugeführt, sondern liegt auch am Eingang eines Inverters I1 an. Der erste Differenzverstärker V1 und der Inverter I1 sind jeweils ausgangsseitig über zugeordnete Schalter S1 und S2 mit einem ersten Eingang eines zweiten Differenzverstärkers V2 verbindbar. An dessen zweitem Eingang liegt der Istwert U (ISP) an, der die Ventilstellung eines als Soloventil oder Pilotventil betriebenen Magnetventils repräsentiert. Die Ventilstellung S (ISP) wird als Weg s von einem Istwertgeber 5 aufgenommen und in eine Spannung U als elektrischer Istwert U (ISP) umgewandelt.

Der Ausgang des zweiten Differnzverstärkers V2 liefert an den Regelspannungsausgang RA die Regelspannung U (R). Die Differenzverstärker V1, V2 und der Inverter I1 bilden einen Regler R, der in Abhängigkeit von anliegenden Istwerten und Sollwerten die Regelsspannung U (R) erzeugt.

Die Umschaltlogik 3 besitzt einen ersten Ausgang Q und einen hierzu inversen Ausgang Q, die mit Betätigungsmagneten M1 bzw. M2 oder elektronischen Schalteingängen oder elektronischen Schaltern verbunden sind. Liegt am Eingang der Umschaltlogik 3 der Pegel -14 V an, so aktiviert die Umschaltlogik 3 den Ausgang Q, so daß der Betätigungsmagnet M1 oder elektronische Schalter die mit ihr verbundenen Schalter S2 und S4 schließt. Der inverse Ausgang Q wird in diesem Fall nicht aktiviert, so daß die Betätigungsmagnete M2 oder elektronischen Schalter die ihnen zugeordneten Schalter S1 und S3 geöffnet lassen. Liegt dagegen am Steuereingang SE1 der Istwert U (IH) des Hauptventils an, so wird dieser Zustand von der Umschaltlogik 3 erkannt und der Ausgang Q und der daran angeschlossene Betätigungsmagnet M2 bzw. elektronische Schalter aktiviert. Dies hat zur Folge, daß die Schalter S1 und S3 geschlossen werden, während die Schalter S2 und S4 geöffent bleiben.

### 1. Solobetriebenes Magnetventil

Die Schalter S2 und S4 sind geschlossen, während die Schalter S1 und S3 geöffent sind. Der Sollwert U (S) wird über den Inverter I1 und den Schalter S2 dem ersten Eingang des zweiten Differenzverstärkers V2 zugeführt, an dessen anderem Eingang der Istwert U (ISP) des solobetriebenen Magnetventils anliegt. Über den Schalter S4 wird der Istwert U (ISP) auch dem Istwertausgang IA zugeführt. Am Ausgang des zweiten Differenzverstärker V2 tritt die zur Regelung des Magnetventils erforderliche Regelspannung U (R) auf.

Da der Schalter S1 geöffnet ist, ist der erste Differenzverstärker V1 unwirksam.

### 2. Pilotbetrieb des Magnetventils zur Steuerung eins druckmittelbetätigten Hauptventils

Am Steuereingang SE1 liegt der Istwert U (IH) des Hauptventils an. Die Schalter S1 und S3 sind geschlossen, während die Schalter S2 und S4 geöffnet sind. Am ersten Differenzverstärker V1 wird ein Vergleich des Istwerts U (IH) mit dem modifizierten Sollwert U (S) vorgenommen und am Ausgang des ersten Differenzverstärkers V1 eine entsprechende Steuerspannung erzeugt, die am ersten Eingang des zweiten Differenzverstärkers V2 anliegt. An dessen zweitem Eingang liegt der Istwert U (ISP) des Magnetventils an, dessen Stellung mit der am zweiten Differenzverstärker V2 abgegebenen Regelspannung U (R) eingestellt wird.

Der Inverter I1 ist in diesem Fall wegen des geöffneten Schalters S2 unwirksam. Am Istwertausgang IA liegt der Istwert U (IH) des Hauptventils an.

## Patentansprüche

1. Regelelektronik für solobetriebene Magnetventile und für Ventilkaskaden mit jeweils einem als Pilotventil betriebenen Magnetventil, welches ein druckmittelbetätigtes Hauptventil steuert, wobei ein Regler die Regelspannung für das Magnetventil erzeugt, dadurch gekennzeichnet, daß ein Signaleingang (SE1) für den Istwert (U (IH)) der Ventilstellung des Hauptventils mit einer Umschaltlogik (3) verbunden ist, die die Regelelektronik auf Solobetrieb einstellt, wenn am Steuereingang (SE1) ein den Solobetrieb kennzeichnender konstanter Pegel (-14 v) anliegt, oder auf Pilotbetrieb einstellt, wenn am Steuereingang (SE1) der Istwert (U (IH)) der Ventilstellung des Hauptventils anliegt, wobei ein Regler (R) im Solobetrieb die Regelspannung (U (R)) aus einem Soll-Istwertvergleich der Werte des Magnetventils und im Pilotbetrieb aus einem SollIstwertvergleich der Werte des Hauptventils ableitet.

2. Regelelektronik nach Anspruch 1, dadurch gekennzeichnet, daß der Signaleingang (SE1) für den Istwert (U (IH)) des Hauptventils mit dem Eingang der Umschaltlogik (3) und einem Ersteingang eines ersten Differenzverstärkers (V1) verbunden ist, an dessen zweiten Eingang sowie an einem Eingang eines Inverters (I1) der Sollwert (U (S)) der Ventilstellung des Hauptventils bzw. im Solobetrieb des Magnetventils anliegt; daß die beiden Ausgänge des ersten Differenzverstärkers (V1) und des Inverters (I1) über zwei gegensinnig von der Umschaltlogik (3) betätigbare Schalter (S1, S2) mit einem ersten Eingang eines zweiten Differenzverstärkers (V2) verbunden sind, an dessen zweitem Eingang der Istwert (U (ISP)) der Ventilstellung des als Soloventil oder Pilotventil betriebenen Magnetventils anliegt und dessen Ausgang die Regelspannung (U (R)) abgibt, wobei bei Solobetrieb des Magnetventils der eine, dem Differenzverstärker (V1) nachgeschaltete Schalter (S1) offen und der andere, dem Inverter (I1) nachgeschaltete Schalter (S2) geschlossen ist, während bei Pilotbetrieb des Magnetventils der eine Schalter (S1) geschlossen und der andere Schalter (S2) offen ist.

3. Regelelektronik nach Anspruch 2, dadurch gekennzeichnet, daß alternativ der Signaleingang (SE1) für den Istwert (U (IH)) des Hauptventils über einen dritten Schalter (S3) oder der Eingang (SE2) für den Istwert (U (ISP)) des Magnetventils über einen vierten Schalter (S4) mit einem Istwertausgang (IA) verbindbar ist.

4. Regelelektronik nach einem der vorhergehenden Ansprüche, dadurch gekennzeichnet, daß bei Solobetrieb eines Magnetventils der Steuereingang (SE1) mittels einer Kontaktbrücke (2) mit einer Gleichspannungsquelle elektrisch verbunden ist.

## Claims

1. Electronic control system for individually operated solenoid valves and for valves in cascade with in each case one solenoid valve which is operated as a pilot valve and which controls a pressure medium-actuated main valve, a controller producing the control circuit for the solenoid valve, characterized in that a signal input (SE1) for the actual value (U (IH)) of the valve position of the main valve is connected to a change-over logic (3) which sets the electronic control system to individual operation if a constant level (-14 v) which characterizes individual operation is present at the control input (SE1) or sets it to pilot operation if the actual value (U (IH)) of the valve position of the main valve is present at the control input (SE1), a controller (R) deriving the control voltage (U (R)) during individual operation from a desired value/actual value comparison of the values of the solenoid valve and deriving it during pilot operation from a desired value/actual value comparison of the values of the main valve.

2. Electronic control system according to Claim 1, characterized in that the control input (SE1) for the actual value (U (IH)) of the main valve is connected to the input of the changeover logic (3) and a first input of a first difference amplifier (V1) at whose second input and at an input of an inverter (I1) the desired value (U (S)) of the valve position of the main valve, or of the solenoid valve during individual operation, is present; in that the two outputs of the first difference amplifier (V1) and of the inverter (I1) are connected to a first input of a second difference amplifier (V2) via two switches (S1, S2) which can be actuated in opposite ways by the changeover logic (3), at the second input of which difference amplifier (V2) the actual value (U (ISP)) of the valve position of the solenoid valve which is operated as an individual valve or pilot valve is present and the output of which difference amplifier (V2) outputs the control voltage (U (R)), the one switch (S1) which is connected downstream of the difference amplifier (V1) being open during individual operation of the solenoid valve and the other switch (S2) which is connected downstream of the inverter (I1) being closed, while during pilot operation of the solenoid valve the one switch (1) is closed and the other switch (S2) is open.

3. Electronic control system according to Claim 2, characterized in that, alternatively, the signal input (SE1) for the actual value (U (IH)) of the main valve can be connected via a third switch (S3), or the input (SE2) for the actual value (U (ISP)) of the solenoid valve can be connected via a fourth switch (S4), to an actual value output (IA).

4. Electronic control system according to one of the preceding claims, characterized in that during individual operation of a solenoid valve the control input (SE1) is electrically connected to a direct voltage source by means of a contact bridge (2).

## Revendications

1. Electronique de régulation pour des électrovannes à fonctionnement isolé ou pour des cascades de vannes comportant, chaque fois, une électrovanne fonctionnant comme vanne pilote qui commande une vanne principale actionnée par un fluide sous pression, un régulateur créant la tension de régulation pour l'électrovanne, caractérisée en ce qu'une entrée de signal (SE1) pour la valeur réelle (U(IH)) de la position de la vanne principale est reliée à une logique de commutation (3) qui règle l'électronique de régulation en mode de fonctionnement isolé si, l'entrée de commande (SE1), reçoit un niveau constant (-14 V) caractérisant le mode de fonctionnement indépendant ou encore sur le mode pilote si l'entrée de commande (SE1) reçoit la valeur réelle (U(IH)) de la position de la vanne principale, un régulateur (R) fournissant en mode de fonctionnement indépendant, la tension de régulation (U(R)) résultant de la comparaison de la valeur de consigne et de la valeur réelle de l'électrovanne et en mode pilote, de la comparaison entre la valeur de consigne et la valeur réelle de la vanne principale.

2. Electronique de régulation selon la revendication 1, caractérisée en ce que l'entrée de commande (SE1) de la valeur réelle (U(IH)) de la vanne principale est reliée à l'entrée de la logique de commutation (3) et à une première entrée d'un premier amplificateur de différence (V1) dont la seconde entrée ainsi qu'une entrée d'un inverseur (I1) reçoivent la valeur de consigne (U(S)) de la position de la vanne principale ou en mode de fonctionnement isolé la position de l'électrovanne, /les deux sorties du premier amplificateur de différence (V1) et de l'inverseur (I1) étant reliées par deux commutateurs (S1, S2) actionnés en sens opposés par la logique de commutation (3), à une première entrée d'un second amplificateur de différence V2 dont la seconde entrée reçoit la valeur réelle (U(ISP)) de la position de l'électrovanne fonctionnant comme vanne indépendante ou comme vanne pilote, /et dont la sortie fournit la tension de régulation (U(R)), le mode de fonctionnement indépendant de l'électrovanne ouvrant le commutateur (S1) en aval de l'amplificateur de différence (V1) et fermant l'autre commutateur (S2) en aval de l'inverseur (I1) alors qu'en mode pilote de l'électrovanne, l'un des commutateurs (S1) est fermé et l'autre commutateur (S2) est ouvert.

3. Electronique de régulation selon la revendication 2, caractérisée en ce qu'en alternance, l'entrée de signal (SE1) de la valeur réelle (U(IH)) de la vanne principale peut être reliée par l'intermédiaire d'un troisième commutateur (S3) ou l'entrée (SE2) de la valeur réelle (U(ISP) de l'électrovanne peut être reliée à la sortie de valeur réelle (IA) par l'intermédiaire d'un quatrième commutateur (S4).

4. Electronique de régulation selon l'une des revendications précédentes, caractérisée en ce qu'en mode de fonctionnement indépendant de l'électrovanne, l'entrée de commande (SE1) est reliée électriquement par un pompe de contact (2) à une source de tension continue.
